# EUROPEAN PATENT APPLICATION

(11) **EP 4 557 147 A1**
(43) Date of publication of application: **21.05.2025**
(21) Application number: 23855199.8
(22) Date of filing: 18.08.2023
(51) Int. Cl.: G06F 21/62, G06F 21/53, G06F 21/57, G06F 21/60

(54) **ELECTRONIC DEVICE AND METHOD FOR EXECUTING PRIVACY ENHANCE MODE IN ELECTRONIC DEVICE**

(30) Priority: 19.08.2022 KR 20220104360; 01.02.2023 KR 20230013788
(71) Applicant: Samsung Electronics Co., Ltd., Suwon-si, Gyeonggi-do 16677 (KR)
(72) Inventor: JEONG, Bokdeuk, Suwon-si Gyeonggi-do 16677 (KR); KIM, Taesoo, Suwon-si Gyeonggi-do 16677 (KR)
(74) Representative: Gulde & Partner
(86) International application number: PCT/KR2023/012296
(87) International publication number: WO 2024/039233

(57) **Abstract**

According to an embodiment, an electronic device comprises: a memory (130 of FIG. 1); and at least one processor (120 of FIG. 1) connected to the memory (130 of FIG. 1). The at least one processor (120 of FIG. 1) may change an execution mode of the electronic device to a privacy enhance (PE) mode, in response to a user input. In response to the execution mode of the electronic device being changed to the PE mode, the at least one processor (120 of FIG. 1) may control a request to generate an application executed in the PE mode to be transmitted from a general region (420 of FIG. 4, 720 of FIG. 7, 820 of FIG. 8) to a secure region (410 of FIG. 4, 710 of FIG. 7, 810 of FIG. 8). In response to the request to generate the application, the at least one processor (120 of FIG. 1) may control the application to be executed in the secure region (410 of FIG. 4, 710 of FIG. 7, 810 of FIG. 8).

## Description

### [Technical Field]

The disclosure relates to a method of executing a privacy enhance mode in an electronic device.

### [Background Art]

In order to translate languages written by humans into languages readable by a CPU, general compile languages are translated into machine languages according to a CPU's architecture and the environment of a platform. In the case of Java, it is compiled into a byte code so as to be operable in multiple architectures or platforms, instead of being suitable for the architecture or environment of one CPU. To this end, a Java virtual machine is required.

A Dalvik virtual machine has been used as a runtime for executing the Android operating system. Recently, a runtime named Android run time (ART) is used instead of the Dalvik virtual machine. In the case of installing an application based on the ART, information needed for executing the application is stored in a cache file.

Recently, there is the need for a method of preventing the exposure of personal information when an application that requires personal information protection is executed based on the ART.

### [Detailed Description of the Invention]

### [Technical Problem]

The disclosure proposes a method of changing an execution mode of an electronic device to a privacy enhance mode when an application that requires personal information protection is executed.

### [Technical Solution]

According to an embodiment, an electronic device may include memory and at least one processor connected to the memory. The at least one processor may change an execution mode of the electronic device to a privacy enhance (PE) mode in response to a user input. The at least one processor may perform control so that a request for generating an application that is executed in the PE mode is transferred from a normal area to a secure area in response to the change of the execution mode of the electronic device to the PE mode. The at least one processor may perform control so that the application is executed in the secure area in response to the request for generating the application.

According to an embodiment, an operation method of an electronic device may include an operation of changing an execution mode of the electronic device to a privacy enhance (PE) mode in response to a user input. The operation method of the electronic device may include an operation of transferring a request for generating an application that is executed in the PE mode from a normal area to a secure area in response to the change of the execution mode of the electronic device to the PE mode. The operation method of the electronic device may include an operation of executing the application in the secure area in response to the request for generating the application.

According to an embodiment, a computer-readable storage medium that stores at least one instruction may be provided. The at least one instruction, when executed by at least one processor, may cause the electronic device to perform a plurality of operations. The plurality of operations may include an operation of changing an execution mode of the electronic device to a privacy enhance (PE) mode in response to a user input. The plurality of operations may include an operation of transferring a request for generating an application that is executed in the PE mode from a normal area to a secure area in response to the change of the execution mode of the electronic device to the PE mode. The plurality of operations may include an operation of executing the application in the secure area in response to the request for generating the application.

### [Advantageous Effects]

The embodiments of the disclosure may change an execution mode of an electronic device to a privacy enhance mode when an application that requires personal information protection is executed, so as to prevent the exposure of personal information.

### [Brief Description of Drawings]

FIG. 1 is a block diagram schematically illustrating an electronic device in a network environment according to an embodiment.
FIG. 2 is a block diagram illustrating a program according to an embodiment.
FIG. 3A is a diagram illustrating an example of activating a PE mode by changing an entire execution mode to the PE mode according to an embodiment of the disclosure;
FIG. 3B is a diagram illustrating an example of executing an application in a PE mode according to an embodiment of the disclosure;
FIG. 3C is a diagram illustrating an example of installing an application to be executed only in a PE mode according to an embodiment of the disclosure;
FIG. 4 is a diagram illustrating a process of transferring an application execution request in a PE mode according to an embodiment of the disclosure;
FIG. 5 is a diagram illustrating a system service operation in the case of a change to a PE mode according to an embodiment of the disclosure;
FIG. 6 is a diagram illustrating a process in which an application starts in a PE mode according to an embodiment of the disclosure;
FIG. 7 is a diagram illustrating operations in a normal area (non-secure world) and a secure area (realm world) when an application is executed in a PE mode according to an embodiment of the disclosure;
FIG. 8 is a diagram illustrating a process of protecting memory used by an application when the application is executed in a PE mode according to an embodiment of the disclosure; and
FIG. 9 is a flowchart illustrating the operation of an electronic device according to an embodiment of the disclosure.

### [Mode for Carrying out the Invention]

Hereinafter, an embodiment of the disclosure will be described in detail with reference to the accompanying drawings. Furthermore, in describing an embodiment of the disclosure, a detailed description of known functions or configurations incorporated herein will be omitted when it is determined that the description may make the subject matter of the embodiment of the disclosure unnecessarily unclear. The terms which will be described below are terms defined in consideration of the functions in an embodiment of the disclosure, and may be different according to users, intentions of the users, or customs. Therefore, the definitions of the terms should be made based on the contents throughout the specification.

It should be noted that the technical terms used herein are only used to describe specific embodiments, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used herein should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include" should not be interpreted to necessarily include all elements or all steps described in the specification, and should be interpreted to be allowed to exclude some of them or further include additional elements or steps.

Alternatively, the terms including an ordinal number, such as expressions "a first" and "a second" may be used to described various elements, but the corresponding elements should not be limited by such terms. The above terms are used merely for the purpose of distinguishing one element from other elements. For example, a first element may be termed a second element, and similarly, a second element may be termed a first element without departing from the scope of protection of the disclosure.

It should be understood that when an element is referred to as being "connected" or "coupled" to another element, it may be connected or coupled directly to the other element, or any other element may be interposer between them. Contrarily, in the case where an element is referred to as being "directly connected" or "directly coupled" to any other element, it should be understood that no other element exists therebetween.

Hereinafter, an embodiment according to the disclosure will be described in detail with reference to the accompanying drawings, and the same or similar elements are given the same and similar reference numerals, regardless of drawing signs, so duplicate descriptions thereof will be omitted. Alternatively, in describing an embodiment of the disclosure, a detailed description of known functions or configurations incorporated herein will be omitted when it is determined that the description may make the subject matter of the disclosure unnecessarily unclear. Alternatively, it should be noted that the accompanying drawings are presented merely to help easy understanding of the disclosure, and are not intended to limit the disclosure. The technical idea of the disclosure should be construed to cover all changes, equivalents, and alternatives, in addition to the drawings.

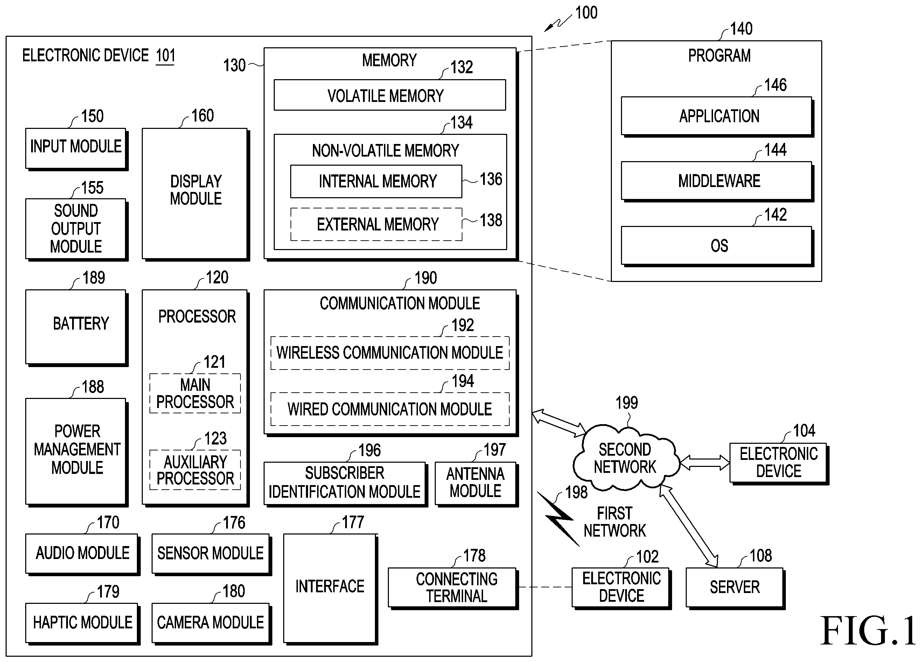

FIG. 1 is a block diagram schematically illustrating an electronic device in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

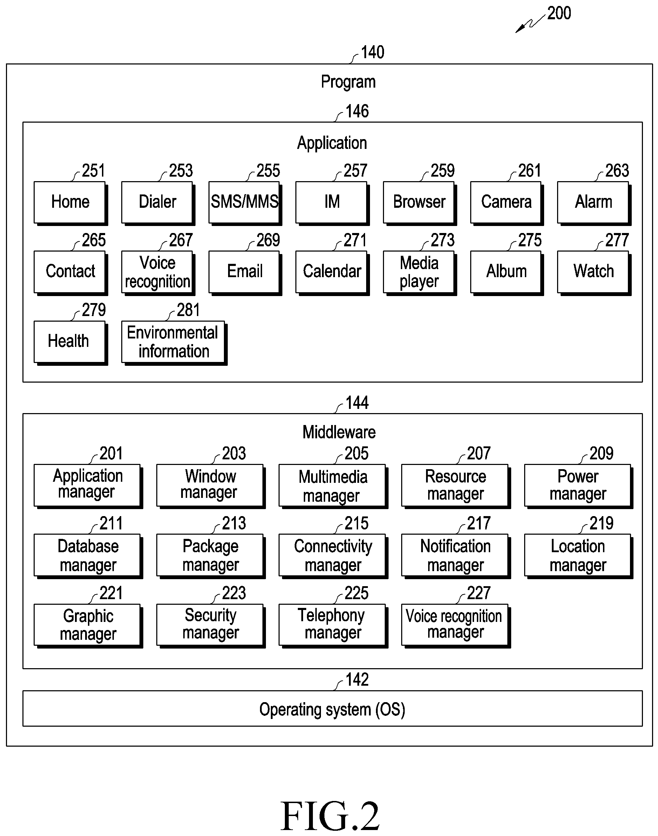

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input device 150, the sound output device 155, the display device 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display device or a camera module of the external electronic device). The device management application, additionally or alternatively, may support installation, delete, or update of an application running on the external electronic device.

The disclosure proposes a method of executing at least one application in a privacy protection environment when the electronic device 101 operates in a privacy enhance (PE) mode in response to a user input (or user command). According to an embodiment, the PE mode may be dynamically activated (on) or deactivated (off) in response to a user input (or user command) without system reboot of the electronic device 101. For example, a user may activate the PE mode of the electronic device 101 when concerned about personal information exposure (e.g., visiting a foreign country) or executing an application (e.g., including payment, SMS.3^{rd} part app) that requires defending personal information so that a secure execution environment is provided.

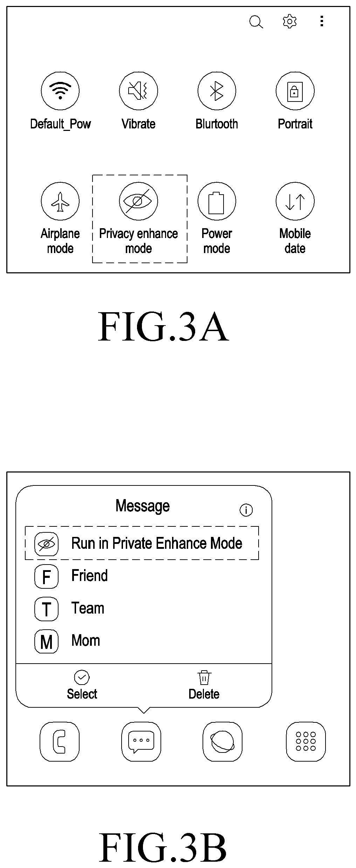

FIG. 3A is a diagram illustrating an example of activating a PE mode by changing an entire execution mode to a PE mode according to an embodiment of the disclosure. Referring to FIG. 3A, a function of activating a PE mode as the entire execution mode of an electronic device may be provided. When the entire execution mode is changed to a PE mode in response to a user input (e.g., a touch input), the PE mode may be activated.

FIG. 3B is a diagram illustrating an example of executing an application in a PE mode according to an embodiment of the disclosure. Referring to FIG. 3B, when an application (e.g., an SMS) is capable of being executed in both a normal mode and a PE mode, the application (e.g., an SMS) may be executed in the PE mode in response to a user input.

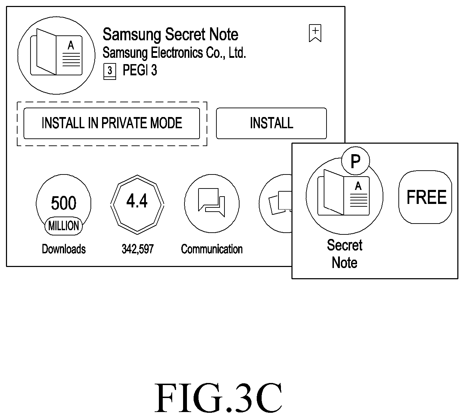

FIG. 3C is a diagram illustrating an example of installing an application to be executed only in a PE mode according to an embodiment of the disclosure. Referring to FIG. 3C, a predetermined application (e.g., Samsung Secret Note) is installed to be executed only in a PE mode, and the fact that the predetermined application is a PE mode execution application is displayed in an application icon after the installation.

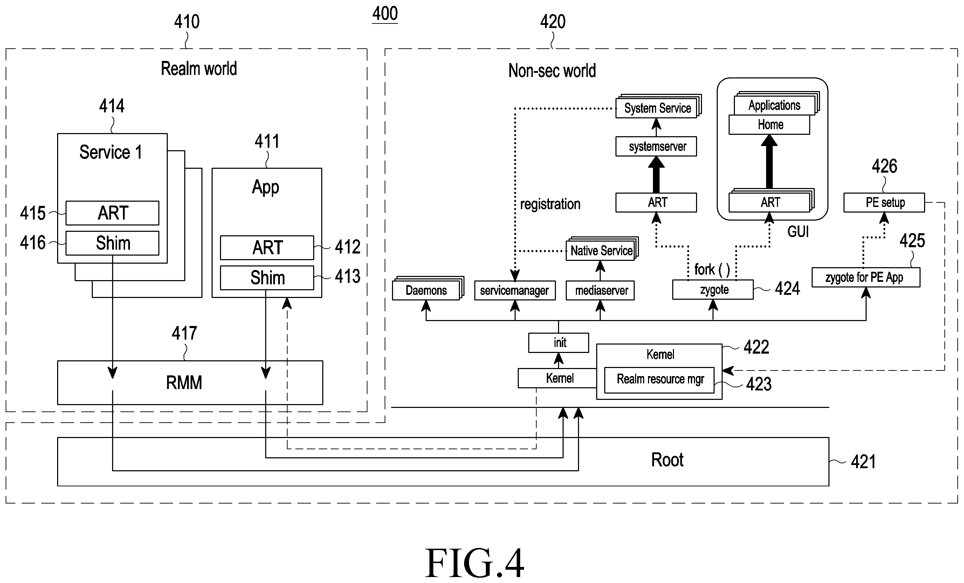

FIG. 4 is a diagram illustrating a process of transferring an application execution request in a PE mode according to an embodiment of the disclosure.

Referring to FIG. 4, an electronic device 400 may include a secure area 410 (or realm world or secure world) and a normal area 420 (or non-secure world or normal world) which independently execute applications and/or services (or application code). According to an embodiment, the secure area 410 and the normal area 420 may be separate areas that are distinguished physically (or based on hardware) in the electronic device 400. According to an embodiment, an application and/or service (or application code) that requires user's privacy (or personal information) protection may be executed in the secure area 410. For example, the normal area 420 may be embodied in an Android environment (or rich execution environment (REE)) and the secure area 410 may be embodied in a trusted execution environment (TEE) physically separated from Android.

In the secure area 410, an application 411 that operates in a PE mode may be executed, and an Android runtime (ART) 412 for executing the application 411 and a shim 413 may be embodied. The ART 412 is an Android app execution environment of the application 411 in the PE mode, and the ART 412 may perform interfacing with the shim 413 to process a system call. For example, the ART 412 may be embodied as a Dalvik virtual machine (VM).

The shim 413 may be an execution environment of the ART 412 in the PE mode. In the PE mode, the shim 413 may process a system call that the ART 412 calls. In the PE mode, the shim 413 may directly process the system call that the ART 412 calls or may forward the same to the normal area 420. According to an embodiment, when forwarding, to the normal area 420, the system call that the ART 412 calls, the shim 413 may sanitize the content that does not need to be transferred so that confidential information of the application 411 in the secure area 410 (e.g., a realm) is not exposed. According to an embodiment, the shim 413 may perform validation of a result value when a system call result is transferred (returned) from the normal area 420.

According to an embodiment, the shim 413 may manage a context of the application 411 in the PE mode, and may configure memory that the application 411 needs to protect and a page table (stage 1 page table).

According to an embodiment, the shim 413 may perform IPC encryption. The shim 413 may encrypt and/or decrypt a shared memory (shmem) region when communicating with another application in the secure area 410 is performed.

According to an embodiment, the shim 413 may request attestation before a trusted code in the secure area 410 is executed. According to an embodiment, the shim 413 may receive a request for attestation from an application in the normal area 420, may request attestation from an RMM 417, and may transfer a result which is an attestation report to the outside via the application in the normal area 420.

In the secure area 410, a service 414 (or application code) operating in the PE mode may be executed, and an ART 415 for execution of the service 414 (or application code) and a shim 416 may be embodied. The ART 415 is an Android app execution environment of the service 414 (or application code) in the PE mode, and the ART 415 may perform interfacing with the shim 416 to process a system call. For example, the ART 415 may be embodied as a Dalvik virtual machine (VM).

The shim 416 may be an execution environment of the ART 415 in the PE mode. In the PE mode, the shim 416 may process a system call that the ART 415 calls. In the PE mode, the shim 416 may directly process the system call that the ART 415 calls or may forward the same to the normal area 420. According to an embodiment, the shim 416 included in the service 414 (or application code) may perform a function same as or similar to the shim 413 included in the application 411.

The system call that the application 411 or service 414 (or application code) calls may be trapped in the RMM 417 in the secure area 410, and may be transferred to a kernel 422 in the normal area 420 via a root 421 in the normal area 420. The RMM 417 is firmware that operates in the secure area 410 (e.g., realm world EL2), may manage a stage 2 page table for the secure area 410, and may manage a cpu context of a realm. According to an embodiment, the realm may be referred to as a software (SW) program that operates at the exception level 0 or 1 in the RMM 417. According to an embodiment, the realm may include all of an ART, a shim, and an application.

The kernel 422 in the normal area 420 may include a realm resource mgr 423, and the realm resource mgr 423 may manage a resource (e.g., a cpu time, memory) in the secure area 410 (e.g., a realm world). According to an embodiment, the kernel 422 may execute a process in the normal area 420. According to an embodiment, the kernel 422 may execute Daemons, servicemanager, mediaserver, a zygote 424, and/or a zygote for PE app 425.

The zygote 424 is a process that is forked in advance in order to quicken an application operation speed, and may include a virtual machine code and applications' commonly used code (Android framework) before an application in the normal area 420 is executed. The zygote 424 may fork a child process. The zygote 424 may fork an Android runtime (ART) for executing an application. Systemserver specialized by the ART may execute a system service. According to an embodiment, the system service executed by the systemserver specialized by the ART may include a function of performing a different operation for the PE mode.

In the disclosure, in addition to the zygote 424 for shortening a time in which an application in the normal area 420 is executed, the zygote for PE app 425 for shortening a time in which the application 411 in the secure area 410 is executed in the PE mode may be independently embodied. According to an embodiment, the zygote 424 and the zygote for PE app 425 may be embodied as a single process.

To request execution of the application 411 or the service 414 (or application code) in the PE mode, the zygote for PE app 425 in the normal area 420 may fork a PE setup 426. The PE setup 426 may perform an environment setup (e.g., a Dalvik image, image load, realm mode context setup, or the like) needed for executing the application 411 or the service 414 (or application code) in the PE mode. The PE setup 426 may transfer, to the kernel 422, the request for execution of the application 411 or service 414 (or application code) in the PE mode. The PE setup 426 may request, from the RMM 417, attestation for an early stage initial realm image loaded in the realm.

The application 411 or the service 414 (or application code) may receive the execution request transferred from the PE setup 426 via the root 421 and the RMM 417.

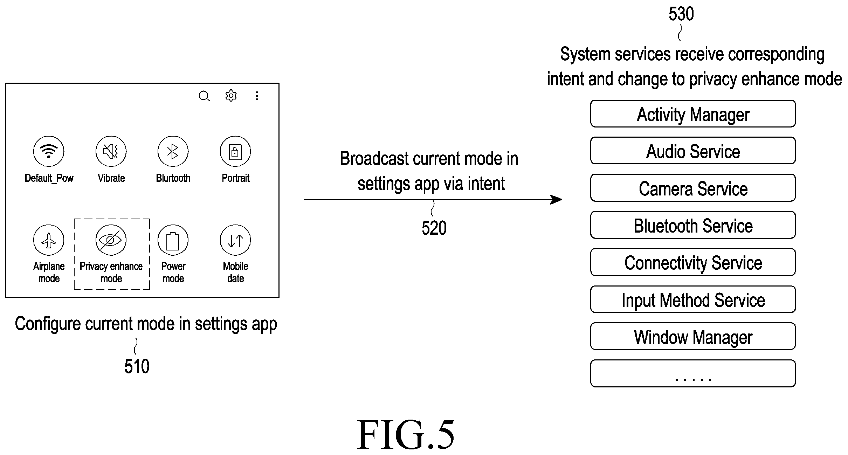

FIG. 5 is a diagram illustrating a system service operation in the case of a change to a PE mode according to an embodiment of the disclosure.

Referring to FIG. 5, in operation 510, when an entire execution mode is changed to a PE mode in a settings application in response to a user input (e.g., a touch input), the PE mode may be activated (e.g., Settings. System.PRIV ACY_ENHANCE_MODE_ON).

In operation 520, the settings application may broadcast that the current mode of an electronic device is the PE mode via an intent.

For example, the broadcasted intent may be configured as follows.

```
 // Post an intent to reload
 Intent intent = new Intent(Intent.ACTION_PRIVACY_MODE_CHANGED);
 intent.putExtra("state", !isEnabled);
 sendBroadcast(intent);
```

In operation 530, system services may receive an intent broadcasted from the settings application, and may change the mode to the PE mode. The system services may be the system services illustrated in FIG. 3. According to an embodiment, the system services may include at least one of an activity manager, an audio service, a camera service, a Bluetooth service, a connectivity service, an input method service, and a window manager.

According to an embodiment, an example of operating system services in the case of a change to the PE mode is as shown in the following (1) to (10).

Only one app running on the front (no background communication allowed): only executes an application (foreground app) currently used by a user, and does not allow an application executed in the background. In this instance, an application/service needed for the PE mode may be executed in the background.

(2) Maintaining minimum service execution: stops execution of an application and service installed by a user.

(3) App firewall: executes a firewall service.

(4) Lowering GPU precision or removed: lowers the precision of a timer in order to avoid a side channel attack using a GPU such as a rowhammer attac or the like.

(5) Blocking receiver phone number: activates a function of hiding a user's number (caller ID) when the user makes a call.

(6) Webview instance initialization: jit disabling, etc.

(7) Making Intent explicit: when sending an (Android) intent that an application transmits to a service or another application, provides intent information (via a popup window) to a user, and transmits only an inter-application intent approved by the user or the corresponding intent. Alternatively, it activates a function of monitoring a suspicious intent using an intent filtering function and notifying the same to a user.

(8) Preventing call redirection: prevents redirection of an incoming call to the number of another mobile or phone.

(9) Preventing app from unknown sources: prevents execution of an application that is downloaded from an unknown source that is different from an authorized source such as Android Play Store or the like.

(10) Disabling mic/video by default (even if perm is allowed).

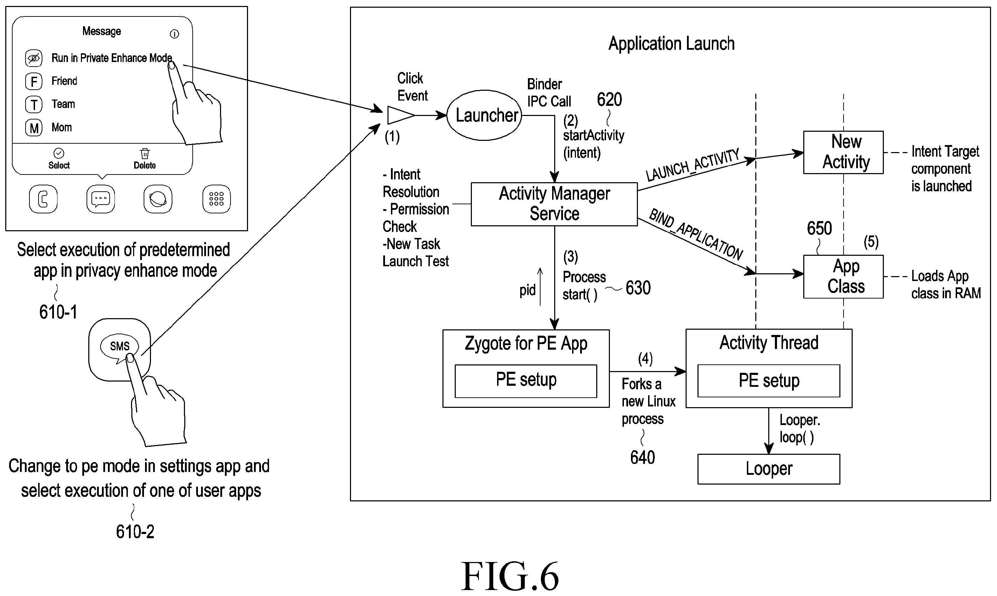

FIG. 6 is a diagram illustrating a process in which an application starts in a PE mode according to an embodiment of the disclosure.

Referring to FIG. 6, an application is executed in a PE mode in operation 610-1 or 610-2.

In operation 610-1, when an application (e.g., an SMS) is capable of being executed in both a normal mode and a PE mode, the application (e.g., an SMS) may be executed in the PE mode in response to a user input.

In operation 610-2, after the electronic device is changed to the PE mode in settings, an application (e.g., an SMS) may be executed in response to the user input. In operation 620, a home application (launcher) determines whether to execute the application in the PE mode and transfers a request for executing the application in the PE mode to an activity manager service via IPC. In operation 630, generation of the application may be requested from a zygote for PE app that is in charge of generating an application in the PE mode. According to an embodiment, in order to execute the application in the PE Mode, the activity manager service may communicate with the zygote for PE app, instead of the zygote.

In operation 640, the zygote for PE app may generate a new process (fork a new Linux process). After generating the process, the zygote for PE app may load and/or execute a PE setup module. The zygote for PE app may load the PE setup module in advance, and may generate a new process, so that the PE setup module may be executed in the newly generated process. In order to shorten a loading time, the zygote for PE app may include an ART image (e.g., a Dalvik VM image) in advance.

In operation 650, a target application code may be loaded. The zygote for PE app may load the target application code, and may load the target application code at an initial execution stage in the newly generated process. According to an embodiment, the entire target application code may be executed in a realm world. According to an embodiment, some codes in a single application may be executed in the normal area, and only some codes that require security may be loaded and executed in the realm world.

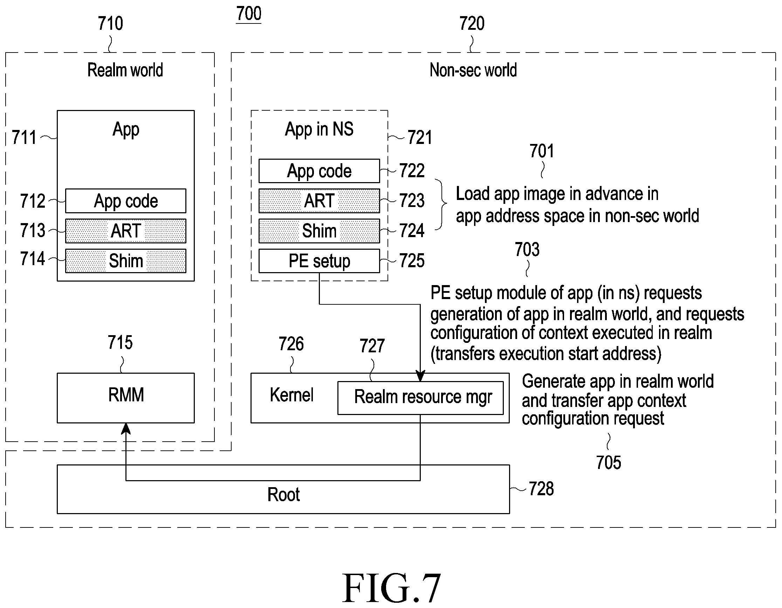

FIG. 7 is a diagram illustrating operations in a normal area (non-secure world) and a secure area (realm world) when an application is executed in a PE mode according to an embodiment of the disclosure.

Referring to FIG. 7, an electronic device 700 may include a secure area 710 (or realm world or secure world) and a normal area 720 (or non-secure world or normal world) which independently execute applications and/or services (or application code). According to an embodiment, the secure area 710 and the normal area 720 may be separate areas that are distinguished physically (or based on hardware) in the electronic device 700. According to an embodiment, an application and/or service (or application code) that requires user's privacy (or personal information) protection may be executed in the secure area 710. For example, the normal area 720 may be embodied in an Android environment (or rich execution environment (REE)) and the secure area 710 may be embodied in a trusted execution environment (TEE) physically separated from Android.

In the secure area 710, an application 711 operating in the PE mode may be executed. The application 711 may include an application code 712, an Android runtime (ART) 713 for execution of the application 711, and a shim 714. The ART 713 is an Android app execution environment of the application 711 in the PE mode, and the ART 713 may perform interfacing with the shim 714 to process a system call. For example, the ART 713 may be embodied as a Dalvik virtual machine (VM).

The shim 714 may be an execution environment of the ART 713 in the PE mode. In the PE mode, the shim 714 may process a system call that the ART 713 calls. In the PE mode, the shim 714 may directly process the system call that the ART 713 calls or may forward the same to the normal area 720. According to an embodiment, the shim 714 may manage a context of the application 711 in the PE mode, and may configure memory that the application 711 needs to protect and a page table (stage 1 page table).

According to an embodiment, the shim 714 may perform IPC encryption. The shim 714 may encrypt and/or decrypt a shared memory (shmem) region when communication with another application in the secure area 710 is performed. According to an embodiment, the shim 714 may request attestation before a trusted code in the secure area 710 is executed. According to an embodiment, the shim 714 may transfer a request for attestation to the application 721 in the normal area 720, and may transfer an attestation report to the outside via the application 721 in the normal area 720.

In the normal area 720, the application 721 operating in the normal mode different from the PE mode may be executed. The application 721 may include an application code 722, an ART 723 for execution of the application 721, a shim 724, and a PE setup 725. The ART 723 is an Android app execution environment of the application 721 in the normal mode, and the ART 723 may perform interfacing with the shim 724 to process a system call. For example, the ART 723 may be embodied as a Dalvik virtual machine (VM).

In operation 701, an application image may be loaded in advance in an app address space in the normal area 720. In operation 703, the PE setup 725 may request generation of an application from the secure area 710, and may request configuring an application context in the secure area 710 (transferring an execution start address).

A kernel 726 in the normal area 720 may include a realm resource mgr 727, and the realm resource mgr 727 may manage a resource (e.g., a cpu time, memory) in the secure area 710 (e.g., a realm world). In operation 705, the kernel 726 in the normal area 720 may transfer the application generation request and the application context configuration request to the RMM 715 in the secure area 710 via a root 728 in the normal area 720.

The RMM 715 that receives the application generation request and the application context configuration request may generate a stage 2 table for the secure area 710, and may configure or generate in advance an application execution request point. The RMM 715 may configure a cpu context for execution of the application 711. For example, the RMM 715 may configure an entry point (execution start address) of the application 711 (configured in a elr_el2 register). According an eret instruction, the RMM 715 may switch to an exception level at which the application 711 is executed, and may enable the application 711 to be executed in the secure area 710.

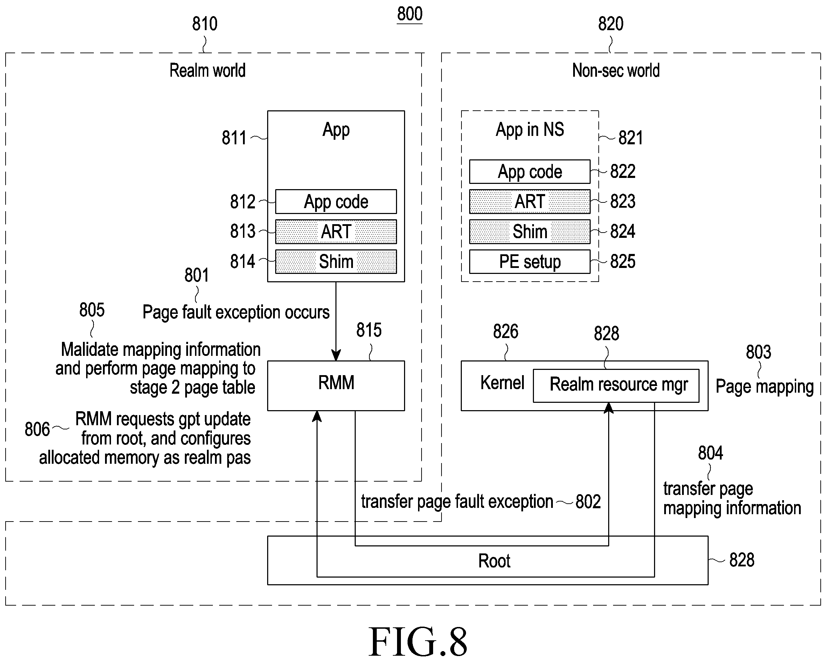

FIG. 8 is a diagram illustrating a process of protecting memory used by an application when the application is executed in a PE mode according to an embodiment of the disclosure.

Referring to FIG. 8, an electronic device 800 may include a secure area 810 (or realm world or secure world) and a normal area 820 (or non-secure world or normal world) which independently execute applications and/or services (or application code). According to an embodiment, the secure area 810 and the normal area 820 may be separate areas that are distinguished physically (or based on hardware) in the electronic device 800. According to an embodiment, an application and/or service (or application code) that requires user's privacy (or personal information) protection may be executed in the secure area 810. For example, the normal area 820 may be embodied in an Android environment (or rich execution environment (REE)) and the secure area 810 may be embodied in a trusted execution environment (TEE) physically separated from Android.

In the secure area 810, an application 811 operating in the PE mode may be executed. The application 811 may include an application code 812, an Android runtime (ART) 813 for execution of the application 811, and a shim 814. In the normal area 820, an application 821 operating in the normal mode different from the PE mode may be executed. The application 821 may include an application code 822, an ART 823 for execution of the application 821, a shim 824, and a PE setup 825.

In operation 801, a page fault exception may occur in the application 811 in the secure area 810. In operation 802, an RMM 815 in the secure area 810 may transfer the page fault exception to a realm resource mgr 827 in the normal area 820. In operation 803, the realm resource mgr 827 may perform page mapping. In operation 804, the realm resource mgr 827 may transfer page mapping information to the RMM 815. In operation 805, the RMM 815 may validate the mapping information and may perform page mapping with respect to the stage 2 page table. In operation 806, the RMM 815 in the secure area 810 may request granule protection table (GPT) update from a root 828 in the normal area 820, and may configure allocated memory as a realm PAS. The GPT may be managed by a monitor in the root world, and may be used for configuring memory for each PAS defined in ARM CCA. According to an embodiment, memory may be allocated in advance when an application is configured in the realm.

Except for the purpose of sharing (e.g., communication with an NS-sec application 821 or service, or transferring a system call service to a kernel) with the normal area 820 (non-secure world), all the memory that the application 811 uses may correspond to the realm PAS and may be prevented from being configured in the normal area 820. According to an embodiment, in association with the memory that needs to be shared with the normal area 820, the shim may inform the RMM of the corresponding memory region information, and the RMM may maintain the information so that the memory is prevented from being configured as memory for the realm world in the granule protection table (GPT) and stage 2 page table, and may utilize the same for the stage 2 page table and GPT update.

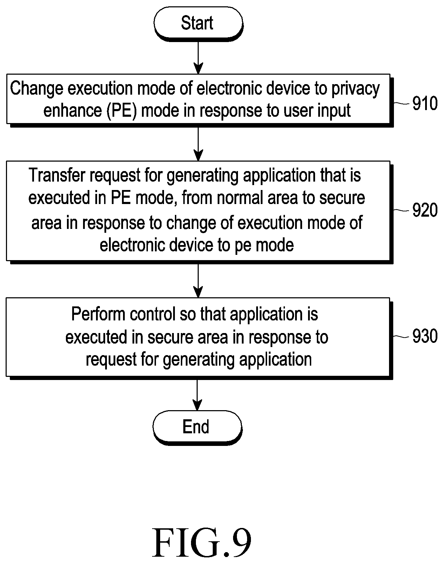

FIG. 9 is a flowchart illustrating the operation of an electronic device according to an embodiment of the disclosure.

Referring to FIG. 9, in operation 910, the electronic device may change an execution mode of the electronic device to a privacy enhance (PE) mode in response to a user input. In operation 910, in response to the change of the execution mode of the electronic device to the PE mode, the electronic device may transfer a request for generating an application that is executed in the PE mode from a normal area to a secure area. In operation 930, in response to the request for generating the application, the electronic device may perform control so as to execute the application in the secure area.

According to an embodiment, the secure area and the normal area may be configured as separate areas that are physically distinguished in the electronic device.

According to an embodiment, in response to the change of the execution mode of the electronic device to the PE mode, the electronic device may perform control so that at least one system service performs at least one configured operation according to the PE mode. According to an embodiment, the system services may include one of an activity manager, an audio service, a camera service, a Bluetooth service, a connectivity service, an input method service, and a window manager.

According to an embodiment, in response to the change of the execution mode of the electronic device to the PE mode, the electronic device may perform control so that a request for configuring a context of the application that is executed in the PE mode is transferred from the normal area to the secure area. According to an embodiment, in response to the request for configuring the context of the application, the electronic device may perform control so that the context is configured in the secure area.

According to an embodiment, in response to the user input, the electronic device may perform control so as to select the PE mode as the entire execution mode of the electronic device. According to an embodiment, the electronic device may perform configuration so that the application is executed only in the PE mode.

According to an embodiment, the normal area may include a first zygote that shortens a time in which the application is executed in the normal area, and a second zygote that shortens a time in which the application is executed in the secure area. According to an embodiment, the second zygote may fork a PE configuration process (PE setup) that performs configuration required to execute the application in the PE mode in the secure area.

According to an embodiment, a kernel included in the normal area may include a resource manager (resource mgr) that manages a resource of the secure area. According to an embodiment, the kernel may be configured to receive, from the PE configuration process, the request for generating the application in the PE mode.

According to an embodiment, the secure area may include firmware (RMM) that manages a page table (stage page table) for the secure area, and manages a context of the application that is executed in the secure area. According to an embodiment, the firmware (RMM) may be configured to receive the request for generating the application in the PE mode from the kernel.

According to an embodiment, the application that is executed in the secure area may include an Android runtime (ART) and a shim to process a system call that the Android runtime calls. According to an embodiment, the shim may be configured to configure a memory region that the application needs to protect in the PE mode and a page table (stage page table), and to manage a context of the application. According to an embodiment, the shim may be configured to encrypt or decrypt a shared memory region when communication with another application executed in the secure area is performed. According to an embodiment, the shim may be configured to request attestation before a trusted code is execute in the secure area.

According to an embodiment, a computer-readable storage medium that stores at least one instruction may be provided. The at least one instruction, when executed by at least one processor, may cause the electronic device to perform a plurality of operations. The plurality of operations may include an operation of changing an execution mode of the electronic device to a privacy enhance (PE) mode in response to a user input. The plurality of operations may include an operation of transferring a request for generating an application that is executed in the PE mode from a normal area to a secure area in response to the change of the execution mode of the electronic device to the PE mode. The plurality of operations may include an operation of executing the application in the secure area in response to the request for generating the application.

## Claims

1. An electronic device comprising:
memory (130 of FIG. 1); and
at least one processor (120 of FIG. 1) connected to the memory (130 of FIG. 1),
wherein the at least one processor (120 of FIG. 1) is configured to:
change an execution mode of the electronic device to a privacy enhance (PE) mode in response to a user input;
control so that a request for generating an application that is executed in the PE mode is transferred from a normal area (420 of FIG. 4, 720 of FIG. 7, 820 of FIG. 8) to a secure area (410 of FIG. 4, 710 of FIG. 7, 810 of FIG. 8) in response to the change of the execution mode of the electronic device to the PE mode; and
control so that the application is executed in the secure area (410 of FIG. 4, 710 of FIG. 7, 810 of FIG. 8) in response to the request for generating the application.

2. The electronic device of claim 1, wherein the secure area and the normal area are configured as separate areas physically distinguished in the electronic device.

3. The electronic device of one of claims 1 and 2, wherein the at least one processor is configured to control so that at least one system service performs at least one configured operation according to the PE mode in response to the change of the execution mode of the electronic device to the PE mode.

4. The electronic device of one of claims 1 to 3, wherein the at least one processor is configured to:
control so that a request for configuring a context of an application that is executed in the PE mode is transferred from a normal area to a secure area in response to the change of the execution mode of the electronic device to the PE mode; and
control so that the context is configured in the secure area in response to the request for configuring the context of the application.

5. The electronic device of one of claims 1 to 4, wherein the at least one processor is configured to control so as to select the PE mode as an entire execution mode of the electronic device in response to the user input.

6. The electronic device of one of claims 1 to 4, wherein the at least one processor is configured to make a configuration so that the application is executed only in the PE mode.

7. The electronic device of one of claims 1 to 4, wherein the normal area is configured to comprise:
a first zygote that shortens a time in which an application is executed in the normal area; and
a second zygote that shortens a time in which the application is executed in the secure area.

8. The electronic device of one of claims 1 to 7, wherein the second zygote forks a PE configuration process (PE setup) that performs configuration required to execute the application in the PE mode in the secure area.

9. The electronic device of one of claims 1 to 7, wherein a kernel included in the normal area is configured to comprise a resource manager (resource mgr) that manages a resource of the secure area.

10. The electronic device of any one of claim 8 or claim 9, wherein the kernel is configured to receive, from the PE configuration process, the request for generating the application in the PE mode.

11. The electronic device of one of claims 1 to 9, wherein the secure area is configured to comprise firmware (RMM) that manages a page table (stage page table) for the secure area, and manages a context of the application that is executed in the secure area, and
wherein the firmware (RMM) is configured to receive the request for generating the application in the PE mode from the kernel.

12. The electronic device of one of claims 1 to 11, wherein the application that is executed in the secure area is configured to comprise:
an Android runtime (ART); and
a shim to process a system call that the Android runtime calls.

13. The electronic device of one of claims 1 to 12, wherein the shim is configured to configure a memory region and a page table (stage page table) that the application needs to protect in the PE mode, and to manage a context of the application.

14. The electronic device of one of claims 1 to 13, wherein the shim is configured to encrypt or decrypt a shared memory region when communication with another application executed in the secure area is performed.

15. An operation method of an electronic device, the method comprising:
changing an execution mode of the electronic device to a privacy enhance (PE) mode in response to a user input;
transferring a request for generating an application that is executed in the PE mode from a normal area (420 of FIG. 4, 720 of FIG. 7, 820 of FIG. 8) to a secure area (410 of FIG. 4, 710 of FIG. 7, 810 of FIG. 8) in response to the change of the execution mode of the electronic device to the PE mode; and
executing the application in the secure area (410 of FIG. 4, 710 of FIG. 7, 810 of FIG. 8) in response to the request for generating the application.
